# DEMANDE DE BREVET EUROPEEN

(11) **EP 2 543 786 A1**
(43) Date de publication de la demande: **09.01.2013**
(21) Numéro de dépôt: 12354036.1
(22) Date de dépôt: 13.06.2012
(51) Int. Cl.: E04B 5/48, F16L 3/12, F24D 3/14

(54) **Support de maintien en position d'un conduit lors de la réalisation d'une chape de mortier**

(30) Priorité: 05.07.2011 FR 1102103
(71) Demandeur: Schneider Electric Industries SAS, 92500 Rueil-Malmaison (FR)
(72) Inventeur: Perrin, Alain, 38050 Grenoble Cedex 09 (FR)
(74) Mandataire: Picard, Laurent

(57) **Abrégé**

Support de maintien (10, 100) en position d'un conduit (11, 101) comme une gaine ou un tuyau, lors de la réalisation d'une chape (15, 108) de mortier sur une structure de base (104) telle qu'une dalle de béton, le support étant pourvu d'éléments de fixation (21, 113) permettant la fixation du support à la structure de base et d'éléments de positionnement et de maintien (12, 17, 102, 103) du conduit adaptés pour maintenir le conduit dans une configuration donnée au niveau de la chape à réaliser

## Description

### DOMAINE TECHNIQUE

L'invention concerne un support de maintien en position d'un conduit comme une gaine ou un tuyau, lors de la réalisation d'une chape de mortier sur une structure de base telle qu'une dalle de béton. Le support est pourvu d'éléments de fixation permettant la fixation du support à la structure de base et d'éléments de positionnement et de maintien du conduit adaptés pour maintenir le conduit dans une configuration donnée au niveau de la chape à réaliser.

### ETAT DE LA TECHNIQUE ANTERIEURE

Dans la construction des bâtiments, il est classique de réaliser une chape par une mise en place de mortier ou équivalent sur une épaisseur d'isolant thermique et/ou phonique lui-même rapporté sur une structure de base telle qu'une dalle de béton, un plancher ou analogue.

Lors de la réalisation d'une telle chape, on en profite généralement pour faire passer des conduits de type gaine ou tuyau, par exemple destinés à assurer la protection de canalisations internes de transport d'énergie de type câbles électriques (réseau électrique, électronique, ou de télécommunication entre les différentes parties du bâtiment) et/ou de type canalisations fluidiques (réseau d'eau sanitaire, de chauffage ou conduits de gaz). Les conduits sont disposés au moment de la mise en place du mortier de sorte qu'après la réalisation de la chape, ils la traversent jusqu'à venir traverser la structure de base sous-jacente, ou venir courir entre la chape et la structure de base, notamment dans l'épaisseur de l'isolant. Ceci évite le percement ultérieur de la chape.

Si de tels conduits sont connus depuis longtemps, il reste que lors de la réalisation de la chape, ces conduits sont disposés sur le chantier sans l'aide d'un quelconque maintien. En raison de l'encombrement sur le chantier que représentent un ensemble de conduits ainsi non maintenus, notamment dans le cas de gaines émergeantes au pied d'un mur existant, la mise en place du mortier est délicate à cet emplacement et la qualité du résultat est parfois discutable, notamment pour des problèmes d'absence locale de mortier ou de défaut de planéité de la chape. L'une des conséquences de ces probièmes réside dans une étanchélté de la chape à l'air à cet emplacement qui n'est potentiellement pas satisfaisante, abaissant d'autant la qualité d'isolation de l'ensemble. La seule solution pour corriger de tels défauts consiste à reboucher les absences de mortier par des matières rapportées sur la chape telles que du mastic. Mais ces opérations se traduisent par des opérations supplémentaires fastidieuses, coûteuses financièrement et en temps, et dont la fiabilité de résultat est aléatoire sur le moment et sujette à détérioration dans le temps.

Ces constats et les risques liés sont d'autant plus importants en raison du caractère relativement friable du mortier utilisé pour la réalisation de la chape, à la différence d'un béton globalement plus résistant utilisé par exemple dans le cas où la structure de base sur laquelle est rapportée la chape est une dalle.

D'autre part, l'absence de maintien des conduits au cours de la réalisation de la chape induit une absence d'organisation des conduits après séchage de la chape, et qui sont au contraire disposés aléatoirement les uns par rapport aux autres.

### EXPOSE DE L'INVENTION

C'est à ces inconvénients qu'entend plus particulièrement remédier l'invention en proposant un support qui permet de maintenir au moins un conduit au moment de la réalisation d'une chape de mortier.Un autre objet de l'invention consiste à proposer un tel support de maintien de conduit qui soit peu onéreux, aisé à mettre en place et utilisable en toute sécurité.

Le support de maintien selon l'invention comporte un piétement ayant une partie arrière se trouvant éloignée d'une zone de maintien du conduit d'une distance dite d'étanchéité, ladite distance d'étanchéité éloignant la portion verticale du conduit du mur au niveau de support de maintien pour participer à l'étanchéité de part et d'autre de la chape.

De préférence, les éléments de fixation sont aménagés dans une partie inférieure du support de maintien et en ce que les éléments de positionnement et de maintien sont agencés au moins dans une partie supérieure dudit support.

De préférence, la hauteur du support de maintien est configurée de sorte que sa partie supérieure puisse être au moins partiellement noyée dans la chape lors de sa réalisation.

Selon un mode de développement de l'invention, les éléments de positionnement et de maintien sont aptes à immobiliser un conduit individuel dans une configuration incurvée de courbure désirée.

Les éléments de positionnement et de maintien comprennent une zone de maintien délimitée par une goulotte de réception en forme de coude et configurée pour couder une portion du conduit entre une portion horizontale de celui-ci destinée à s'étendre sous la chape et une portion verticale de celui-ci destinée à sortir de la chape du côté opposé à la structure de base.

Avantageusement, les éléments de positionnement et de maintien comprennent des éléments d'encliquetage de la portion de conduit correspondante à l'intérieur de la goulotte de réception.

Avantageusement, en ce qu'il comporte des organes d'accrochage pour fixer, ou se fixer à, un autre support de maintien adjacent.

Selon un autre mode de développement de l'invention, les éléments de positionnement et de maintien sont aptes à immobiliser une pluralité de conduits entre eux.

De préférence, les éléments de positionnement et de maintien comprennent une zone de maintien du conduit, zone de maintien délimitée par une pluralité d'ouvertures horizontales permettant chacune le passage vertical d'un conduit associé.

Avantageusement, le piètement est destiné à maintenir les ouvertures horizontales à distance de la structure de base et comprend des moyens de réglage de la distance séparant les ouvertures horizontales et la structure de base.

Avantageusement, les moyens de réglage sont constitués par l'aménagement d'une pluralité de zones sécables prédéterminées à différentes hauteurs du piètement.

Avantageusement, les ouvertures horizontales sont ménagées dans des plaques rapportées de manière amovible sur le piétement, les dimensions des ouvertures pouvant varier d'une plaque à l'autre pour une adaptabilité à des conduits de diamètres différents.

### BREVE DESCRIPTION DES FIGURES

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
la figure 1 est une vue en perspective d'un premier mode de réalisation d'un support de maintien selon l'invention,
la figure 2 est une vue de côté du support de la figure 1, en situation de maintien d'un conduit,
la figure 3 illustre l'accrochage possible entre deux supports selon la figure 1 disposés de manière adjacente,
la figure 4 représente l'agencement de la figure 3 après mise en place de deux conduits et mise en place de mortier,
la figure 5 est une vue en perspective d'un deuxième mode de réalisation d'un support de maintien selon l'invention,
la figure 6 illustre de devant et de derrière une partie du support de la figure 5,
la figure 7 représente le support de la figure 5 après fixation sur une structure de base et en situation de maintien collectif d'une pluralité de conduits,
la figure 8 représente l'agencement de la figure 7 après mise en place de mortier.

### DESCRIPTION DETAILLEE DE MODES DE REALISATION

Comme énoncé précédemment, l'invention concerne le maintien en position d'au moins un conduit au moment de la réalisation d'une chape de mortier. Il peut s'agir d'un ou plusieurs conduit(s) comme une gaine ou un tuyau, par exemple pour la protection de canalisations de transport d'énergie de type câbles électriques (réseau électrique, électronique, ou de télécommunication entre les différentes parties du bâtiment) et/ou de divers types fluidiques (réseau d'eau sanitaire, de chauffage ou conduites de gaz divers).

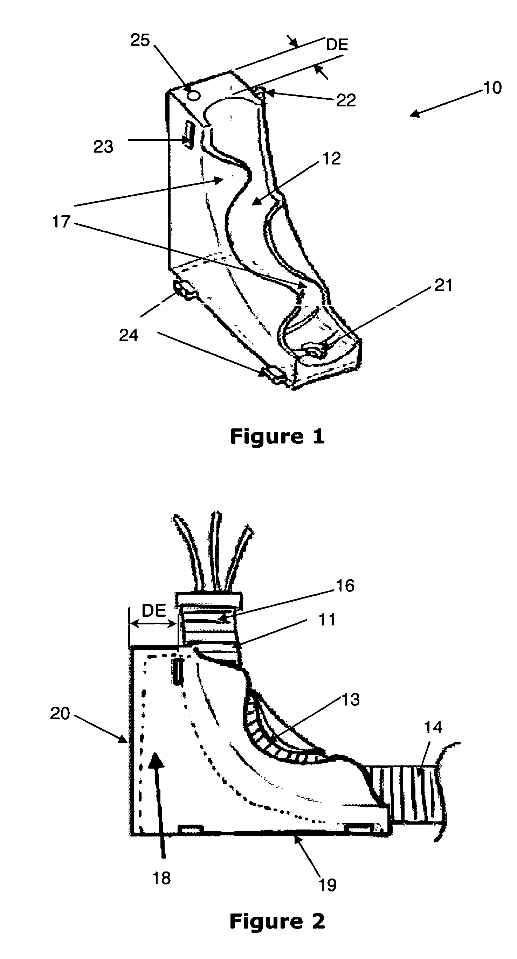

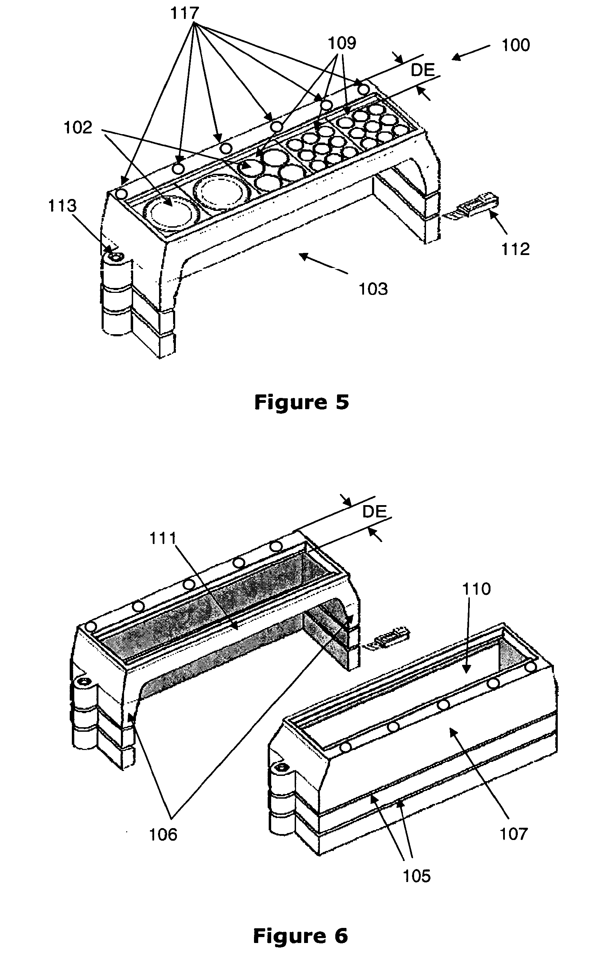

Ainsi, il est proposé deux modes de réalisation de support de maintien selon l'invention, le premier en référence aux figures 1 à 4 étant destiné au maintien individuel d'un conduit et le deuxième en référence aux figures 5 à 8 étant destiné au maintien collectif d'une pluralité de conduits. De manière générale, chacun des supports détaillés ci-dessous assurent un maintien en position d'au moins un conduit comme une gaine ou un tuyau, lors de la réalisation d'une chape de mortier sur une structure de base telle qu'une dalle de béton ou un plancher. Le support est pourvu à cet effet d'éléments de fixation permettant la fixation du support à la structure de base et d'éléments de positionnement et de maintien dudit au moins un conduit adaptés pour maintenir ce conduit dans une configuration donnée au niveau de la chape à réaliser. Les éléments de fixation peuvent être aménagés dans une partie inférieure du support et sont destinés à être mis en oeuvre avant la mise en place du mortier, tandis que les éléments de positionnement et de maintien peuvent être agencés au moins dans une partie supérieure du support, voire sur sensiblement toute la hauteur du support comme c'est le cas pour le premier mode de réalisation. Avantageusement, la hauteur du support peut être configurée de sorte que cette partie supérieure puisse être au moins partiellement noyée dans la chape lors de sa réalisation.

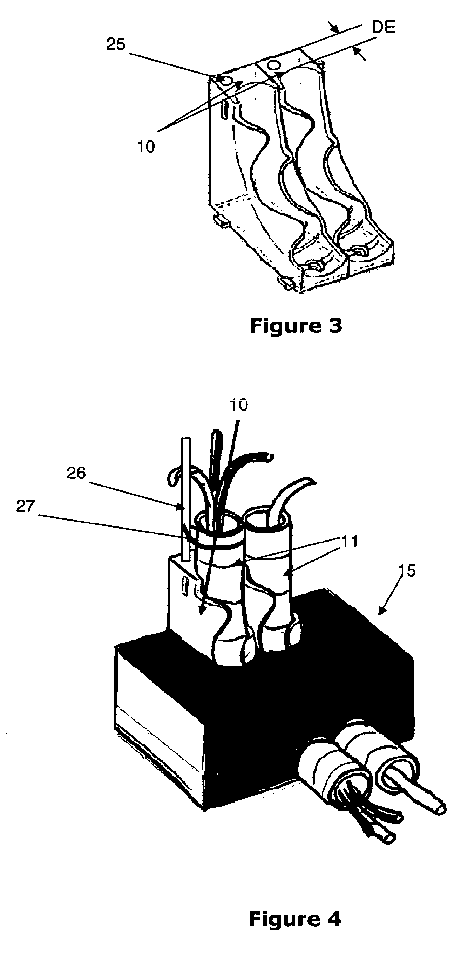

Le premier mode de réalisation de support de maintien 10 est maintenant détaillé en référence aux figures 1 et 2 notamment. Les éléments de positionnement et de maintien sont conçus pour être aptes à immobiliser un conduit 11 individuel, par exemple une gaine adaptée à la protection de canalisations de type câbles électriques, dans une configuration incurvée de courbure désirée, notamment à l'aide d'une goulotte de réception 12 en forme de coude. Plus précisément, la goulotte 12 est configurée pour couder une portion de conduit 13 entre une portion horizontale 14 de celui-ci destinée à s'étendre sous la chape 15 (voir figure 4) et une portion verticale 16 de celui-ci destinée à sortir de la chape 15 du côté opposé à la structure de base qui n'est pas représentée ici. La goulotte de réception 12 peut être pourvue sur ses bords longitudinaux d'éléments d'encliquetage 17 de la portion 13 de conduit 11 correspondante à l'intérieur de la goulotte. Les éléments d'encliquetage 17 adoptent par exemple la forme d'ailettes présentant une flexibilité suffisante pour permettre de s'écarter élastiquement suffisamment, depuis une configuration naturelle, afin d'autoriser la mise en place du conduit 11 dans la goulotte 12, puis de revenir par retour élastique dans cette configuration naturelle dans laquelle le conduit ainsi disposé est maintenu dans la goulotte par les ailettes dont les extrémités sont séparées d'une distance inférieure au diamètre attendu du conduit 11.

Les éléments de fixation du support 10 à la structure de base peuvent comprendre un piètement 18, plein ou évidé, globalement en forme d'équerre et destiné à assurer l'appui de la goulotte de réception 12 sur la structure de base. Un tel piétement 18 porte donc extérieurement, à l'opposé de la goulotte de réception 12, une partie inférieure 19 destinée à venir reposer sur la structure de base et une partie arrière 20, perpendiculaire à la partie inférieure 19.

Selon un mode de développement préférentiel de l'invention, la partie arrière 20 du piétement 18 se trouve éloignée d'une zone de maintien du conduit 11 d'une distance dite d'étanchéité DE. Selon ce mode de réalisation, la zone de maintien est délimitée par la goulotte de réception 12. Grâce la présence de cette distance d'étanchéité DE, la portion verticale du conduit 11 n'est pas directement contre le mur au niveau du support 10. Selon ce mode de réalisation, la partie arrière 20 du piètement 18 pourra avantageusement être plaquée contre ce mur afin de participer à l'étanchéité de part et d'autre de la chape 15.

Pour remplir la fonction de fixation à la structure de base, le piètement 18 peut comporter en partie avant opposée à la partie arrière 20 un trou 21 débouchant à une extrémité dans le fond de la goulotte 12 et à l'extrémité opposée au niveau de la partie inférieure 19. Ce trou 21 est destiné à l'installation d'un organe de fixation (non représenté) tel qu'une vis ou un clou (notamment en fonction du type de structure de base) venant assurer le maintien du piétement 18 sur la structure de base. Toutefois, l'emplacement et le nombre de tels trous 21 peuvent être différents sans se départir du concept de l'invention.

En outre, les éléments de fixation peuvent comprendre des organes d'accrochage pour fixer, ou se fixer à, un autre support de maintien adjacent, comme illustré en figure 3. De tels organes d'accrochage peuvent par exemple comprendre un ergot d'accrochage 22 prévu sur une face latérale du piétement 18 adapté pour coopérer avec une lumière de retenue 23 prévue sur la face latérale opposée du piétement 18 d'un support 10 adjacent. Pour maintenir les parties inférieures 19 des piétements des supports adjacents plaquées l'une contre l'autre, les parois latérales opposées de chacun des piétements 18 peuvent être équipées d'éléments d'emboitement 24 de type mâle-femelle.

Les éléments de positionnement et de maintien constitués par la goulotte de réception 12 et par les éléments d'encliquetage 17 sont ainsi ici agencés sur sensiblement toute la hauteur du support 10. Contrairement à ce que représente la figure 4, la hauteur du support 10 peut être configurée de sorte que la partie supérieure du support 10, constituée par la partie de goulotte 12 et de piétement 18 où émerge la portion 13 de conduit 11 qui se prolonge par la portion verticale 16, puisse être au moins partiellement noyée dans la chape 15 lors de sa réalisation.

Très avantageusement le socle est doté d'un orifice 25 permettant de disposé une tige rigide 26 , par exemple fer à béton. La tige sert de tuteur au conduit 11. Un lien 27 embrasse le conduit 11 et vient se fixer autour de la tige 26. Ainsi l'extrémité du conduit qui dépasse du support de maintien ne repose pas à terre mais est maintenu au dessus du niveau du sol fini pour faciliter la réalisation de la chape.

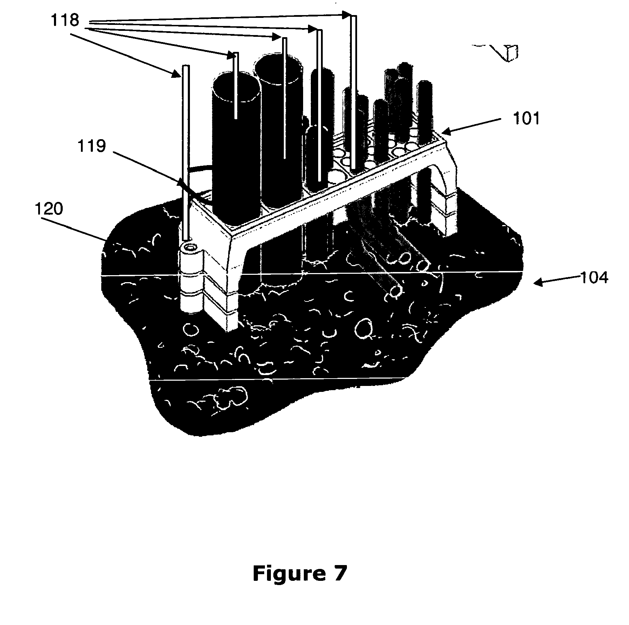

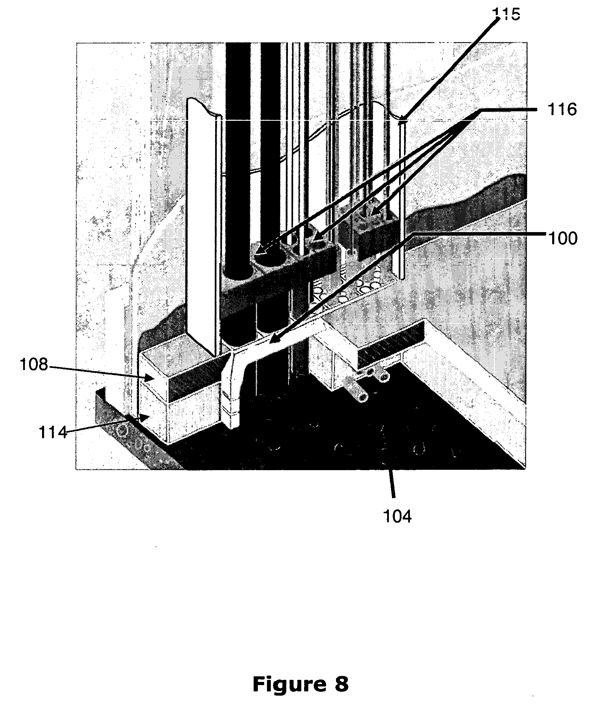

Le deuxième mode de réalisation de support de maintien 100 est maintenant détaillé en référence aux figures 5 et 6 notamment. Les éléments de positionnement et de maintien sont ici conçus pour être aptes à immobiliser une pluralité de conduits 101 (visibles sur les figures 7 et 8) relativement entre eux. Comme l'illustre la figure 5, les éléments de positionnement et de maintien comprennent par exemple une pluralité d'ouvertures horizontales 102 permettant chacune le passage vertical d'un conduit 101 associé. Un piètement 103 est destiné à maintenir les ouvertures horizontales 102 à distance de la structure de base 104 (qui est dans l'exemple illustrée une dalle de béton) lorsque le support de maintien 100 est fixé à la structure de base 104 par l'intermédiaire d'éléments de fixation qui équipent le piétement 103. Par ailleurs, ce piètement 103 peut comprendre des moyens de réglage de la distance séparant les ouvertures horizontales 102 et la structure de base 104, par exemple en variant la hauteur du support 100 par une modification correspondante de la distance entre la partie supérieure du support équipée des ouvertures 102 et de sa partie inférieure en appui sur la structure de base 104. De tels moyens de réglage sont par exemple constitués par l'aménagement d'une pluralité de zones sécables 105 prédéterminées à différentes hauteurs du piètement 103, lequel peut être constitué par la combinaison d'une paroi arrière 107 se prolongeant de part et d'autre par deux parois latérales 106 allant d'avant en arrière du support. Ces zones sécables 105 peuvent correspondre par exemple à des amoindrissements locaux de l'épaisseur des parois 106 et 107, tandis que leur rupture peut être obtenue très simplement par découpe à l'aide d'un outil tranchant 112 de type « cutter » illustré sur les figures 5 et 6.

Ainsi, contrairement au premier mode de réalisation, les éléments de positionnement et de maintien qui comprennent les ouvertures 102 sont agencés dans la partie supérieure du support 100, cette partie supérieure étant maintenue à distance de la structure de base 104 par l'ensemble formé par les parois 106 et 107, qui délimitent entre elles un volume ouvert sur le devant du support 100 afin de permettre au mortier de venir combler au moins partiellement ce volume lors de la réalisation de la chape 108. Par les moyens de réglage de la distance entre les ouvertures 102 et la structure de base 104, la hauteur du support 100 peut finalement être configurée de sorte que sa partie supérieure puisse être au moins partiellement noyée dans la chape 108 lors de sa réalisation, comme le montre la figure 8.

En référence à la figure 5, les ouvertures horizontales 102 peuvent avantageusement être ménagées dans des plaques rapportées 109 de manière amovible sur le piétement 103, les dimensions des ouvertures pouvant varier d'une plaque 109 à l'autre pour une adaptabilité à des conduits 101 de diamètres différents. Pour réaliser un tel montage, les parois arrière et latérales 107 et 106 peuvent porter un cadre 111 en partie supérieure du support 100 délimitant intérieurement une ouverture 110 par exemple de forme rectangulaire dont les bords sont pourvus d'éléments prévus pour un encliquetage réversible des plaques 109 sur le cadre 111.

Selon un autre mode de développement préférentiel de l'invention, la paroi arrière 107 du piétement 103 se trouve éloignée d'une zone de maintien 102 du conduit 101 d'une distance dite d'étanchéité DE. Selon ce mode de réalisation, la zone de maintien est délimitée par une pluralité d'ouvertures horizontales 102 permettant chacune le passage vertical d'un conduit 101. Ainsi, les ouvertures horizontales 102 sont éloignées de la partie arrière 107 du support de maintien 100 d'une distance dite d'étanchéité DE. Grâce la présence de cette distance d'étanchéité DE, la portion verticale du ou des conduits 101 débouchant vers le dessus de la partie supérieure du support 100 n'est pas directement contre le mur au niveau du support de maintien 100. Selon ce mode de réalisation, la paroi arrière 107 du piètement 103 pourra avantageusement être plaquée contre ce mur afin de participer à l'étanchéité de part et d'autre de la chape 108.

Pour remplir la fonction de fixation à la structure de base 104, le piètement 103 peut comporter au moins un trou 113 destiné à l'installation d'un organe de fixation (non représenté) tel qu'une vis ou un clou (notamment en fonction du type de structure de base 104) venant assurer le maintien du piétement 103 sur la structure de base 104. Par exemple chacune des parois latérales 106 porte extérieurement un fourreau délimitant intérieurement un tel trou 113 sur une hauteur rendant indépendante la fonction de fixation de celle de réglage conférée par les zones sécables 105. Toutefois, l'emplacement et le nombre de tels trous 113 peuvent être différents sans se départir du concept de l'invention.

Ainsi, chacun des deux supports de maintien 10, 100 précédemment décrits peut être utilisé pour la réalisation d'une chape 15, 108 sur une structure de base telle qu'une dalle de béton. Cette réalisation sera décrite en relation avec le deuxième mode de réalisation de support 100, en référence aux figures 7 et 8.

Dans un premier temps, le procédé de réalisation de la chape 108 consiste à fixer le support de maintien 100 à la structure de base 104, comme le montre la figure 7). Les conduits 101 sont ensuite ainsi maintenus en place dans une configuration donnée au niveau de la chape 108 à réaliser ultérieurement, cette configuration étant telle que les conduits 11 traverseront la chape 108 après sa réalisation, jusqu'à venir traverser la structure de base 104 sous-jacente, ou venir courir entre la chape 108 et la structure de base 104, notamment dans l'épaisseur d'un isolant 114 phonique et/ou thermique éventuellement rapportée sur la structure de base 104 avant la mise en place du mortier. Le placement des conduits 101 sur le support de maintien 100, à travers les ouvertures 102, peut être accompli avant ou après la fixation du support 100 sur la structure de base 104, suivant les cas de figure.

Puis dans un deuxième temps, en référence à la figure 8, le procédé de réalisation de la chape 108 comprend l'étape de mise en place du mortier constitutif après séchage de la chape 108, sur la structure de base 104.

À l'issue de ce procédé, la portion verticale du ou des conduit(s) maintenu(s) par le système de maintien 10, 100 peut être prévue pour s'étendre dans un boitier 115 fixé le long du mur à l'aplomb du support 10, 100. A l'intérieur de ce boitier 115, des embouts d'étanchéité 116 peuvent être rapportés de manière étanche sur les extrémités des conduits. Les dimensions de tels embouts 116 peuvent être adaptées aux diamètres et entraxes associés aux conduits, de sorte que les embouts 116 puissent venir en contact les uns contre les autres et contre les parois du boitier 115 de manière étanche.

Très avantageusement le socle est doté de plusieurs orifices 117 permettant de disposé des tiges rigides 118, par exemple fer à béton. La tige sert de tuteur au conduit souple 101. Un lien 119 embrasse les conduits 101 et vient se fixer autour de la tige 118. Ainsi l'extrémité des conduits souples qui dépassent du support de maintien ne reposent pas à terre mais sont maintenus au dessus du niveau du sol fini pour faciliter la réalisation de la chape.

La partie 120 du support de maintien est inclinée pour : faire un raccordement parfait avec le boitier 115 qui pourra alors avoir empreinte légèrement supérieure à la surface haute du support.

Facilement faire glisser la règle (pour lisser la dalle) sur le support de maintien afin d'assurer un étalement parfait des matériaux pour obtenir une jointure parfaite.

## Revendications

1. Support de maintien (10, 100) en position d'un conduit (11, 101) comme une gaine ou un tuyau, lors de la réalisation d'une chape (15, 108) de mortier sur une structure de base (104) telle qu'une dalle de béton, le support étant pourvu d'éléments de fixation (21, 113) permettant la fixation du support à la structure de base et d'éléments de positionnement et de maintien (12, 17, 102, 103) du conduit adaptés pour maintenir le conduit dans une configuration donnée au niveau de la chape à réaliser, support de maintien **caractérisé en ce qu'**il comporte un piétement (18, 103) ayant une partie arrière (20, 107) se trouvant éloignée d'une zone de maintien (12, 102) du conduit (11, 101) d'une distance dite d'étanchéité (DE), ladite distance d'étanchéité (DE) éloignant la portion verticale du conduit (11, 101) du mur au niveau de support de maintien (10, 100) pour participer à l'étanchéité de part et d'autre de la chape (15, 108).

2. Support de maintien selon la revendication 1, **caractérisé en ce que** les éléments de fixation sont aménagés dans une partie inférieure du support de maintien (10, 100) et **en ce que** les éléments de positionnement et de maintien (12, 17, 102, 103) sont agencés au moins dans une partie supérieure dudit support.

3. Support de maintien selon la revendication 2, **caractérisé en ce que** la hauteur du support de maintien (10, 100) est configurée de sorte que sa partie supérieure puisse être au moins partiellement noyée dans la chape lors de sa réalisation.

4. Support de maintien selon l'une des revendications 1 à 3, **caractérisé en ce que** les éléments de positionnement et de maintien (12, 17) sont aptes à immobiliser un conduit (11) individuel dans une configuration incurvée de courbure désirée.

5. Support de maintien selon la revendication 4, **caractérisé en ce que** les éléments de positionnement et de maintien comprennent une zone de maintien délimitée par une goulotte de réception (12) en forme de coude et configurée pour couder une portion (13) du conduit entre une portion horizontale (14) de celui-ci destinée à s'étendre sous la chape et une portion verticale (16) de celui-ci destinée à sortir de la chape du côté opposé à la structure de base.

6. Support de maintien selon la revendication 5, **caractérisé en ce que** les éléments de positionnement et de maintien comprennent des éléments d'encliquetage (17) de la portion (13) de conduit correspondante à l'intérieur de la goulotte de réception.

7. Support de maintien selon l'une des revendications 4 à 6, **caractérisé en ce qu'**il comporte des organes d'accrochage (22, 23, 24) pour fixer, ou se fixer à, un autre support de maintien adjacent.

8. Support de maintien selon l'une des revendications 1 à 3, **caractérisé en ce que** les éléments de positionnement et de maintien sont aptes à immobiliser une pluralité de conduits entre eux.

9. Support de maintien selon la revendication 8, **caractérisé en ce que** les éléments de positionnement et de maintien (102, 103) comprennent une zone de maintien du conduit (101), zone de maintien délimitée par une pluralité d'ouvertures horizontales (102) permettant chacune le passage vertical d'un conduit (101) associé.

10. Support de maintien selon la revendication 9, **caractérisé en ce que** le piètement (103) est destiné à maintenir les ouvertures horizontales à distance de la structure de base (104) et comprend des moyens de réglage de la distance séparant les ouvertures horizontales (102) et la structure de base.

11. Support de maintien selon la revendication 10, **caractérisé en ce que** les moyens de réglage sont constitués par l'aménagement d'une pluralité de zones sécables (105) prédéterminées à différentes hauteurs du piètement.

12. Support de maintien selon l'une des revendications 9 à 11, **caractérisé en ce que** les ouvertures horizontales (102) sont ménagées dans des plaques rapportées (109) de manière amovible sur le piétement, les dimensions des ouvertures pouvant varier d'une plaque à l'autre pour une adaptabilité à des conduits de diamètres différents.
